# EUROPÄISCHE PATENTSCHRIFT

(11) **EP 2 439 062 B1**
(45) Veröffentlichungstag und Bekanntmachung des Hinweises auf die Patenterteilung: **10.12.2014**
(21) Anmeldenummer: 10013495.6
(22) Anmeldetag: 11.10.2010
(51) Int. Cl.: C09D 133/08, B32B 5/02, B32B 27/12, B32B 27/40, C09J 7/02

(54) **Technisches Klebeband und dessen Verwendung zur Verklebung von Folien oder Vliesen im Baubereich**
Technical adhesive strip and use of same to stick films or non-woven fabrics in construction
Bande adhésive technique et son utilisation pour le collage de films ou d'étoffes dans le domaine de la construction

(43) Veröffentlichungstag der Anmeldung: 11.04.2012
(60) Teilanmeldung: 13193543.9
(73) Patentinhaber: Coroplast Fritz Müller GmbH & Co. KG, 42279 Wuppertal (DE)
(72) Erfinder: Frigge, Christoph, 45549 Sprockhövel (DE)
(74) Vertreter: Patentanwälte Dr. Solf & Zapf

(56) Entgegenhaltungen:
- EP-A1- 1 789 510
- EP-A2- 1 847 577
- EP-A2- 2 231 802
- WO-A1-92/22619
- DE-A1-102005 010 046
- DE-A1-102008 025 980
- DE-U1- 29 704 323

## Beschreibung

Die vorliegende Erfindung betrifft ein technisches Klebeband, insbesondere zur Verklebung von Folien oder Vliesen im Baubereich, mit einem bandförmigen aus Kunststoff bestehenden Träger und mit einer zumindest auf einer Seite aufgetragenen druckempfindlichen Klebebeschichtung, die mit einem Flächengewicht von mindestens 100 g/m² aufgetragen ist. Des Weiteren betrifft die Erfindung die Verwendung eines derartigen Klebebandes.

Im Baubereich werden bei der Außendämmung von Bauwerken in der Regel sehr diffusionsoffene Materialien bevorzugt, um eingedrungene Feuchtigkeit schnell wieder verdunsten zu lassen. Werden solche großflächigen, diffusionsoffenen Dachunterspannbahnen lediglich an den Stoßstellen verklebt, wirkt sich aufgrund des vergleichsweise geringen Flächenanteils auch eine diffusionshemmende oder diffusionsdichte Verklebung nicht negativ aus. Anders sieht es bei der Verklebung von Fugen und Anschlüssen in engen Bauräumen und Ecken wie etwa im Bereich von Fenstereinbauten aus. Hier liegt der Anteil verklebter Flächen häufig bei 50 % oder mehr und hat dadurch erhebliche Auswirkungen auf das gesamte Diffusionsverhalten der Dachabdichtung. In solchen Bereichen werden daher diffusionsoffene Klebebänder bevorzugt.

Ein Klebeband der eingangs genannten Art ist aus der EP 1 548 080 B1 bekannt. Um diesem Klebeband bei wenig aufwändiger Herstellungsweise eine gute Haftung auf rauhen Untergründen zu verleihen, ist dabei vorgesehen, dass die Klebebeschichtung ein Auftragsgewicht von 120 - 250 g/m² aufweist und derart aufgetragen und vernetzt ist, dass das Klebeband eine bestimmte Anfangshaftung auf Stahl sowie eine bestimmte Klebkraft und Scherfestigkeit aufweist. Als Trägermaterialien des bekannten Klebebandes werden handelsübliche Papiere, Folien oder Textilien genannt. Papiere können dabei vorzugsweise durch eine PE-Kaschierung oder eine Wachsschicht wasserabweisend ausgerüstet sein, während PE- oder PP-Folien zur Verbesserung der Zugfestigkeit vorzugsweise mit einem Gelege verstärkt werden können. Durch die für die Klebebeschichtung verwendeten Klebstoffe auf der Basis von Polyacrylaten kann eine hohe Alterungs- und Feuchtigkeitsstabilität gewährleistet werden. Die EP 1 548 080 B1 beschreibt dabei im Besonderen die Verwendung eines UV-vernetzten Acrylatklebstoffes für Bänder der o. g. Art. Ein solcher Klebstoff enthält keine Emulgatoren und hat eine hohe Wasserbeständigkeit. Derartige Bänder sind daher unter dem Aspekt des verwendeten Klebstoffs grundsätzlich für feuchtigkeitsbeanspruchte Bereiche geeignet.

Die CH 687 328 A5 beschreibt ein Klebeband mit einem beschichteten Papierträger zur Verklebung von Dachbahnen. Durch eine PE- (Polyethylen-)Beschichtung wird dabei die Dampfdiffusionsfähigkeit des Papiers "kontrolliert". Da aber zur Isolierung im Außenbereich feuchtigkeitsstabile Materialien benötigt werden, werden solche Bänder in der Regel nicht im Außenbereich eingesetzt.

Des Weiteren beschreibt auch die CH 686 673 A5 ein Klebeband mit einem PE-Folienträger der ebenfalls "dampfdurchlässig" sein soll. Klebebänder mit derartigen Papier- oder Folienträgem werden in der Regel ebenfalls nur im Hausinnenbereich zur Abdichtung von Dampfsperrfolien oder Dampfbremsen eingesetzt. Da sie häufig mit Acrylatklebstoffen auf Dispersionsbasis ausgerüstet sind, ist ihre Verwendung nach Herstellerangaben auf trockene Innenbereiche beschränkt.

In keinem der drei genannten Dokumente sind Messmethoden zur Bestimmung der Dampfdurchlässigkeit, noch Werte dieser Größe für die beanspruchten Bänder angegeben.

Zur Beschreibung des Diffusionsvermögens eines Materials wird jedoch beispielsweise die Wasserdampf-Diffusionsstromdichte V - angegeben in g/m² * Tage - gemäß DIN EN ISO 7783-1 bestimmt. Dabei wird der Gewichtsverlust eines mit einer Salzlösung gefüllten und mit dem Prüfling abgedeckten Behälters über die Zeit bestimmt. Eine übliche Angabe ist auch die der wasserdampfdiffusionsäquivalenten Luftschichtdicke S_{d} - angegeben in m -, welche sich aus der Wasserdampf-Diffusionsstromdichte berechnen lässt. Hierfür ist die Norm DIN 52615 verbindlich. In Fachkreisen werden Materiaüen mit einem s_{d}-Wert ≤ 0,5 m üblicherweise als diffusionsoffen, solche mit einem S_{d}-Wert von 0,5 m -1500 m als diffusionshemmend und Materialien mit einem S_{d}-Wert > 1500 m als diffusionsdicht bezeichnet.

Die EP 1 847 577 A2 beschreibt ein Klebeband mit einem Folienträger aus EVA (Ethylvinylacetat) und TPE-E (Ether-Ester-Blockcopolymer) zur diffusionsoffenen Verklebung von Dachbahnen oberhalb der Dämmschicht. Als bedeutsam wird dabei neben einem niedrigen s_{d}-Wert von ≤ 12 m ein spezielles Dehnungsverhalten herausgestellt. Hierfür wird als charakteristischer Parameter ein Differenzwert zwischen der prozentualen Gesamtdehnung bei Belastung und der prozentualen bleibenden Dehnung nach Belastung (im Folgenden: Dehnungsparameter) eingeführt. Dieser Parameter, für den in Anlehnung an die Norm DIN 53360 eine spezielle Methode zur Ermittlung beschrieben wird, soll gemäß der EP 1 847 577 A2 zwischen 6 und 80 Prozent liegen.

Zur Ermittlung der elastischen Dehnungseigenschaften wird dabei eine Bestimmung in Anlehnung an die DIN-Norm DIN 53360 herangezogen, wobei eine Längenänderung von einem 25 mm breiten Probenstreifen unter einer statischen Last von 1 kg für 30 Minuten und eine Längenänderung nach Entlastung des Probenstreifens ermittelt werden. Aus diesen beiden Werten lässt sich als Parameter die Differenz aus der Gesamtdehnung und der bleibenden Dehnung berechnen.

Im Detail werden dabei zur Durchführung der Messungen aus Trägermaterialproben längs zur Herstellrichtung je 3 Probekörper von 25 mm Breite und mindestens 250 mm Länge entnommen. Auf den Probekörpern wird mit zwei dünnen Markierungen eine Messlänge von 100 ± 0.5 mm eingezeichnet. Die eingezeichneten Messmarken müssen auf den Probekörpern im gleichen Abstand zu den Probekörper-Enden liegen. An den Marken ist der Verlauf der Längsachse einzuzeichnen.

Die Gesamtdehnung einer Probe ist das Verhältnis der Gesamtlängenänderung zur ursprünglichen Messlänge des Probekörpers. Dabei ist die Gesamtlängenänderung der Unterschied zwischen der Messlänge bei konstanter Zugbeanspruchung nach der Beanspruchungsdauer und der ursprünglichen Messlänge des Probekörpers.

Die bleibende Dehnung ist das Verhältnis der bleibenden Längenänderung zur ursprünglichen Messlänge des Probekörpers. Dabei ist die bleibende Längenänderung nach Entlastung der Unterschied zwischen der Messlänge, nach der Entlastung des Probekörpers, d. h. nach Wegnahme der Zugbeanspruchung nach der festgelegten Zeitdauer und der ursprünglichen Messlänge des Probekörpers.

Die Prüfungen werden bei einer Bedingung von 23 ± 2 °C und einer relativen Luftfeuchte von 50 % durchgeführt. Die Proben sind vor den Messungen für 24 Stunden im gleichen Klima zu akklimatisieren. Die 25 mm breiten Probestreifen werden an einer oberen Klemmbacke eingespannt, das untere Ende wird mit einer Klemme und einem Gewicht von 1 kg belastet. Nach 30 Minuten wird der Abstand der Messmarken, unter Zugspannung, abgelesen. Nach Entlastung, d. h. Wegnehmen des 1-kg-Gewichtes, wird nach weiteren 30 Minuten wieder die Dehnung gemessen. Aus diesen Werten lassen sich die Gesamtdehnung und die bleibende Dehnung in Prozent ausrechnen. Danach wird die Differenz zwischen der Gesamtdehnung (statische Dehnung) und der bleibenden Dehnung bestimmt.

Für vorbekannte PE- und PS- (Polystyrol-)Folienträger wurden gemäß der EP 1 847 577 A2 Parameterwerte im Bereich von 0,13 bis 5,13 Prozent ermittelt. Diese Träger werden als ungeeignet angesehen.

Die Druckschrift enthält keine quantitativen Angaben zur Grammatur der Klebebeschichtung. Die geforderte Dehnfähigkeit in Kombination mit einem niedrigen S_{d}-Wert weisen dabei auch Bänder mit perforierter PE-Folie als Träger auf. Nachteilig kann hier ein möglicher Kiebstoffdurchschiag durch die Perforationslöcher sein.

Diffusionsoffen sind auch aus dem Handel bekannte Klebebänder mit Papier- oder Vlies-Träger (Tyvek®), die aber in der Regel eine sehr geringe Dehnbarkeit besitzen.

Neben den Anforderungen an die Diffusionseigenschaften und die Dehnbarkeit der Klebebänder wird wegen einer erwünschten einfachen Handhabung bei der Verarbeitung auf Baustellen auch oft eine Reißbarkeit von Hand bevorzugt. Dies gilt insbesondere für die Verarbeitung im Dachbereich, wo es häufig nicht praktikabel ist, mit zusätzlichen Schneidwerkzeugen zu hantieren.

Gegenläufig zu dieser Forderung verhält sich, dass an die Folienträger der genannten Klebebänder auch gewisse Mindestanforderungen hinsichtlich einer z. B. nach DIN ISO 7765-2 zu bestimmenden Durchstoßfestigkeit gestellt werden.

Schließlich ist zu beachten, dass im Außenbereich die verklebten Bänder zumindest vorübergehend direkter Sonneneinstrahlung ausgesetzt sind. Dies trifft insbesondere dann zu, wenn - wie im Dachbereich oft üblich - die Dachbahnen schwarz eingefärbt sind. Bei den für den Innenbereich konzipierten Folienbändern, wie sie in der CH 686 673 A5 beschrieben sind und deren Träger als "typische PE-Folien" in den Vergleichsbeispielen in der EP 1 847 577 A2 beschrieben sind, kommt es bei Erwärmung im verklebten Zustand aufgrund der mangelnden Flexibilität oberhalb von ca. 80 °C zu einem Faltenwurf. Dieser geht zwar nach Abkühlung wieder zurück, es können aber Restöffnungen verbleiben, die später die Dichtigkeit beeinträchtigen.

Der vorliegenden Erfindung liegt die Aufgabe zugrunde, ein, insbesondere im Außenbereich von Gebäuden einsetzbares, Klebeband der eingangs genannten Art zu entwickeln, das sowohl wasserdicht, als auch flexibel ist, von Hand zu reißen ist aber eine hohe Durchstoßfestigkeit besitzt und auch bei hohen Temperaturbelastungen im verklebten Zustand Schrumpf- und Dehnprozessen elastisch folgen kann, ohne dass es zu Faltenbildungen kommt. In einer besonderen Ausführung soll dieses Klebeband zusätzlich diffusionsoffen sein.

Diese Aufgabe wird mit einem Klebeband der eingangs genannten Art gelöst, bei dem der Träger aus einer gegossenen Polyolefinfolie besteht und derart elastisch und plastisch dehnbar ist, dass ein Differenzwert Δε zwischen der prozentualen Gesamtdehnung bei Belastung und der prozentualen bleibenden Dehnung nach anschließender Entlastung im Bereich von 15 bis 50 Prozent liegt, wobei bei der Messung in Anlehnung an DIN 53360 an 25 mm breiten und mindestens 250 mm langen, längs zur Herstellungsrichtung der Folie entnommenen Probenstreifen unter einer für 30 Minuten aufgebrachten statischen Last von 1 kg die Feststellung der Gesamtdehnung erfolgt und die bleibende Dehnung 30 Minuten nach Entlastung des Probenstreifens ermittelt wird, wobei die Klebebeschichtung aus einem UV-vernetzten oder UV-polymerisierten Acrylatklebstoff besteht.

Ein wesentlicher Unterschied zwischen erfindungsgemäßen und den bekanntermaßen eingesetzten Klebebändern besteht dabei insbesondere im erfindungsgemäßen Materialaufbau des Trägers aus einer gegossenen Polyolefinfolie.

Polyolefinfolien, insbesondere Polyethylenfolien, werden üblicherweise entweder mittels Blasextrusion oder im Gießverfahren hergestellt. Sowohl Gießfolien als auch Blasfolien können dabei als coextrudierte Folien mit bis zu sieben unterschiedlichen Schichten gefertigt werden.

Bei der Blasextrusion wird die aus einem Extruder austretende geschmolzene Polymermasse durch eine Ringdüse zu einem Schlauch geformt. Dieser Schlauch wird in Länge und Breite gestreckt, so dass auch die entstehende Folie in Längs- und in Querrichtung gestreckt wird. Der Schlauch wird durch einen inneren und einen äußeren Luftstrom gekühlt, flachgelegt und zu zwei Folienbahnen aufgeschnitten.

Im erfindungsgemäß zur Herstellung des polyolefinischen Klebebandträgers eingesetzten Gieß- oder Flachfolienverfahren wird die geschmolzene Polymermasse durch eine Breitschlitzdüse auf eine Kühlwalze ("chill roll") aufgetragen. Die Walzengeschwindigkeit ist in der Regel höher als die Austrittsgeschwindigkeit an der Düse. Dadurch wird die Dicke der entstehenden Folie eingestellt und die Folie selbst in Längsrichtung orientiert. Die Kühlwalze kann eine Prägung besitzen, die sich dann als Muster in der Folie wiederfindet.

Gießfolien besitzen durch ihre schnellere Abkühlung eine geringere Kristallinität als Blasfolien und dadurch eine höhere Geschmeidigkeit. Überraschenderweise hat sich gezeigt, dass für eine solchermaßen hergestellte Polyolefinfolie, insbesondere dann, wenn sie einen Polyethlyenanteil von mindestens 50 % aufweist, mehrfach höhere Werte des Differenzwertes Aε zwischen der prozentualen Gesamtdehnung bei Belastung und der prozentualen bleibenden Dehnung nach anschließender Entlastung erzielbar sind. Insbesondere können für diesen Parameter Werte im Bereich von 15 Prozent bis 50 Prozent, vorzugsweise von 20 Prozent bis 30 Prozent eingestellt werden, was die Folie für den erfindungsgemäßen Klebebandträger prädestiniert.

Die wasserdampfdiffusionsäquivalente Luftschichtdicke s_{d} kann dabei im Bereich von ≥ 15 m nach DIN 52615 liegen, insbesondere in einem Bereich von 15 m bis 20 m. Der Träger ist also diffusionshemmend.

Um für eine selbstklebende Ausrüstung des Trägers eine gute Verankerung auch polarer Klebstoffe (Acrylate) auf der zunächst unpolaren Folie zu erreichen, kann die Folie vor der Beschichtung mit dem Klebstoff mit Vorteil ein- oder beidseitig einer elektrischen Entladung (Corona) ausgesetzt werden.

Wie aus den nachfolgend dargestellten Beispielen hervorgeht, können erfindungsgemäße Bänder mit PE-Gießfolien-Träger als Träger ohne Perforation handreißbar ausgestaltet sein, wobei sie aber gleichzeitig eine hohe Durchstoßfestigkeit besitzen und auch bei hohen Temperaturbelastungen im verklebten Zustand Schrumpf- und Dehnprozessen elastisch folgen können, ohne dass es zu Faltenbildungen kommt.

Die Reißbarkeit kann einerseits im subjektiven Test einfach geprüft werden. Eine bessere Vergleichbarkeit liefert jedoch eine Prüfung nach EN 12025 mit dem sogenannten Elmendorf-Pendel. Als gut reißbar haben sich dabei in der Praxis Klebebänder erwiesen, deren Weiterreißkraft nach Elmendorf nicht mehr als 15 N, vorzugsweise nicht mehr als 10 N, beträgt.

Wie bereits erwähnt, wird die Durchstoßfestigkeit von Folienbahnen nach der DIN ISO 7765-2 bestimmt. Dabei werden unter Einsatz von Elektronik eine bis zum Bersten auftretende Verformung - angegeben in mm - und die dafür erforderliche Arbeit - angegeben in J - gemessen.

Die Dicke des Trägers kann dabei für das polyolefinische Gießfolienklebeband im Bereich von 30 µm bis 200 µm, bevorzugt im Bereich von 50 µm bis 80 µm, liegen. Für erfindungsgemäße Klebebänder zur Dachabdichtung werden aufgrund ihrer guten Alterungsbeständigkeit Haftklebstoffe auf Acrylatbasis eingesetzt. Diese Acrylatklebstoffe können als mittels UV-Strahlung zu vernetzende Schmelzklebstoffe aufgetragen werden. Grundsätzlich möglich ist auch der Einsatz von Acrylat-Monomermischungen oder Acrylat-Präpolymeren, die nach der Beschichtung mittels UV-Strahlung polymerisiert werden.

Als Abdeckung für das erfindungsgemäße Klebeband können beispielsweise ein- oder beidseitig silikonisierte Papiere oder Folien eingesetzt werden, die bevorzugt zusätzlich ein- oder beidseitig mit PE befilmt sein können. Die Folien bestehen in der Regel aus PE, PP (Polypropylen) oder aus entsprechenden Coextrudaten. In der Regel wird der Klebstoff auf diese Abdeckung beschichtet, dann getrocknet, vernetzt oder polymerisiert und erst dann in einem Kaschiervorgang auf das Trägermaterial gebracht. Möglich ist auch die Silikonbeschichtung der Trägerrückseite, so dass das Klebeband ohne zusätzlichen Liner auf sich selbst gewickelt werden kann.

Zur Begrenzung der Dehnung kann zwischen Klebstoff und Träger oder innerhalb der Klebstoffschicht ein Gittergelege eingearbeitet sein. Dessen Reißfestigkeit sollte unterhalb der des eigentlichen Trägermaterials angeordnet sein. Eine solche Konstruktion erlaubt zunächst eine dehnungsarme Verarbeitung; wenn aber die Anwendung eine Dehnung erfordert, so wird mit wenig Kraftaufwand das Gelege durchtrennt, ohne gleich das Trägermaterial mitzureißen. Eine Auswirkung auf das Temperaturverhalten des Bandes wurde bei Vorhandensein eines derartigen Geleges nicht festgestellt. Gleichzeitig unterstützt ein solches Fadengelege die Reißbarkeit des Bandes.

Weitere vorteilhafte Ausführungen der Erfindung sind in den Unteransprüchen und der nachfolgenden speziellen Beschreibung enthalten. Anhand mehrerer Ausführungsbeispiele wird dabei die Erfindung näher erläutert.

### Beispiel 1 (Vergleichsbeispiel)

Ein doppelseitig silikonisiertes Glassinepapier mit einem Flächengewicht von 90 g/m² wurde mit einem Dispersionsacrylatklebstoff Acronal V210 der Fa. BASF beschichtet und mittels Warmluft und/oder IR-Strahlung getrocknet, so dass nach der Trocknung ein Auftragsgewicht von 200 g/m² verblieb. Die beschichtete Bahn wurde abgekühlt und es wurde eine gegossene PE-Folie (Dicke: 70 µm, Grammatur: 65 g/m²) als Träger zukaschiert. Nachfolgend ist dieses Klebeband bzw. sein Träger mit dem Buchstaben D gekennzeichnet.

### Beispiel 2 (erfindungsgemäß)

Ein einseitig silikonisiertes Glassinepapier mit einem Flächengewicht von 90 g/m² wurde mit einer Beschichtung von 200 g/m² UV-Acylat AcResin 250 der Fa. BASF versehen, die direkt anschließend mittels UV-Strahlung vernetzt wurde. Die UV-C-Dosis (gemessen mit Power- PuckTM der Fa. EIT, Sterling, Virginia) betrug 70 mJ/cm². Die beschichtete Bahn wurde abgekühlt und in einem Arbeitsgang wurde ein PET-(Polyethylenterephtalat-)Fadengelege (4 Fäden/cm in Laufrichtung, 2 Fäden/cm quer zur Laufrichtung, Fadenstärke 78 dtex) und als Klebebandträger eine gegossene, mit einer Mikroprägung versehene LDPE-Folie (Dicke: 70 µm, Grammatur: 50 - 55 g/m²) zukaschiert. Nachfolgend ist dieses Klebeband bzw. sein Träger mit dem Buchstaben E gekennzeichnet.

### Beispiel 3 (erfindungsgemäß)

Ein doppelseitig silikonisiertes Glassinepapier mit einem Flächengewicht von 90 g/m² wurde mit einer Beschichtung von 200 g/m² UV-Acylat AcResin 250 der Fa. BASF versehen, die direkt anschließend mittels UV-Strahlung vernetzt wurde. Die UV-C-Dosis (gemessen mit Power-PuckTM der Fa. EIT, Sterling, Virginia) beträgt 70 mJ/cm². Die beschichtete Bahn wurde abgekühlt und in einem Arbeitsgang wurden ein PET-Fadengelege (4 Fäden/cm in Laufrichtung, 2 Fäden/cm quer zur Laufrichtung, Fadenstärke 78 dtex) und eine aromatische Polyetherpolyurethanfolie mit einer Dicke von 50 µm und einer Grammatur von 50 g/m² zukaschiert. Nachfolgend ist dieses Klebeband bzw. sein Träger mit dem Buchstaben F gekennzeichnet.

### Weitere Vergleichsbeispiele

Als weitere Vergleichsbeispiele dienten Klebebänder gemäß dem Stand der Technik. Diese Klebebänder bzw. deren Träger sind nachfolgend folgendermaßen bezeichnet:
A - kunststoffbeschichteter Papierträger wie in der CH 687 328 A5 mit einem UV-Acrylatklebstoff (UV-A),
B - LDPE-Folienträger (Blasfolie, Grammatur: 70 g/m²) wie in der CH 686 673 A5, mit einem Fadengelege und einem UV-Acrylatklebstoff (UV-A),
C - EVA/TPE-Folienträger (Grammatur: 70 g/m²) wie in der EP 1 847 577 A2, mit einem Fadengelege und einem Dispersionsacrylatklebstoff (D-A),
G - Träger aus perforierter PE-Folie (70 g/m²), mit einem Fadengelege und einem UV-Acrylatklebstoff (UV-A),
H - PE-Vliesträger (Tyvek®) (Grammatur: 60 g/m²) mit einem UV-Acrylatklebstoff (UV-A).

Zur Beurteilung der Handreißbarkeit wurde zunächst an Klebebändern der Breite 60 mm die Reißkraft nach Elmendorf bestimmt. Dabei wurden die in Tabelle 1 wiedergegebenen Werte ermittelt.

**Tabelle 1: Reißkraft verschiedener Klebebänder nach Elmendorf**

| Klebeband | Elmendorf-Kraft in N |
|---|---|
| A | 3 - 4 |
| B | 8 - 15 |
| C | 7 - 9 |
| D | 5 - 7 |
| E | 6 - 8 |
| F | 7 - 10 |

Zur Beurteilung des Diffusionsverhaltens wurden dann an Klebebandmustern mit einer Probenfläche von 20 cm² die nachfolgend in Tabelle 2 wiedergegebenen S_{d}-Werte bestimmt.

Die Flexibilität der Träger der vorgenannten Klebebänder (ohne Gelege und Klebeschicht) wurde unter den o. g. Bedingungen bzw. entsprechend der Beschreibung in der EP 1 847 577 A2 aus dem Differenzwert der prozentualen Gesamtdehnung bei 30-minütiger Belastung eines 25 mm breiten Streifens mit einer Masse von 1 kg und der prozentualen bleibenden Dehnung nach Entlastung bestimmt. Dabei ergaben sich die in Tabelle 3 aufgeführten Werte.

**Tabelle 2: Wasserdampfdiffusionsfähigkeit verschiedener Klebebänder**

| Klebeband | s_{d}-Wert in m |
|---|---|
| A | 2 - 3 |
| B | 20 - 25 |
| G | 1 - 2 |
| H | 0,2 - 0,4 |
| C | 1 - 2 |
| E | 15 - 20 |
| F | 0,2 - 0,4 |

**Tabelle 3: Dehnungsverhalten verschiedener Klebebandträger**

| Klebeband | Dehnungswert Δε in % |
|---|---|
| A | 0 - 1 |
| H | 1 - 2 |
| B | 5 - 10 |
| D | 20 - 30 |
| G | 25 - 30 |
| C | 50 - 60 |
| F | 170 - 210 |

Die Daten belegen, dass die erfindungsgemäßen Bänder eine deutlich höhere Flexibilität aufweisen als übliche LDPE-Blasfolien, als Papier und PE-Vliese. Der erfindungsgemäße PUR-Folienträger ist sogar deutlich flexibler als das in EP 1 847 577 A2 beanspruchte Trägermaterial.

Bei Verklebung der aus den in Tabelle 3 aufgeführten Trägermaterialien hergestellten Klebebänder auf schwarze Dachbahnen zeigten sich bei Temperaturbelastung deutlich die Vorzüge einer hohen Flexibilität: während das Band mit der herkömmlichen PEBlasfolie einen deutlichen Faltenwurf zeigte, blieben die Verklebungen von erfindungsgemäßen Bändern aus Folienträgern mit höheren Dehnungsparametern unverändert.

Die Durchstoßfestigkeit verschiedener Klebebänder wurde abweichend von der DIN ISO 7765-2 mit Probenabmessungen 60 mm * 60 mm bestimmt. Die Ergebnisse sind in Tabelle 4 aufgeführt.

**Tabelle 4: Durchstoßfestigkeit und Verformbarkeit verschiedener Klebebänder**

| Klebeband | Durchstoßverformung in mm | Durchstoßarbeit in J |
|---|---|---|
| A | 5 - 8 | 0,2 - 0,3 |
| B | 9 - 11 | 0,2 - 0,3 |
| C | 10 - 13 | 0,4 - 0,5 |
| F | 18 - 25 | 0,7 - 1,1 |

Die folgende Tabelle 5 zeigt die Werte der Beispielbänder und die zweier Vergleichsbänder, die den Bändern der CH 686 673 A5 und der EP 1 847 577 A2 entsprechen:

**Tabelle 5: Technische Daten verschiedener Klebebänder**

| | A | C | D | E | F |
|---|---|---|---|---|---|
| Trägerfolie Material Herstellungsart Dicke [µm] | PE Blasfolie 70 | EVA/PE 70 | PE Gießfolie 70 | PE Gießfolie 70 | PUR Blasfolie 50 |
| Klebstoff Material Grammatur 1g/m²] | UV-A 200 | D-A 230 | D-A 200 | UV-A 200 | UV-A 200 |
| Gelege | ja | Ja | nein | ja | Ja |
| s_{d} | 20-25 | 1-2 | 15-20 | 15-20 | 0,2-0,4 |
| Δε [%] | 5-10 | 50-60 | 20-30 | 20-30 | 170-210 |
| TV1 | Falten | - | - | - | - |
| TV2 | Falten | - | - | - | - |
| EK [N] | 8-15 | 7-9 | 5-7 | 6-8 | 7-10 |
| W_{DS} [J] | 0,2 -0,3 | 0,4 -0,5 | 0,2 -0,3 | 0,2 -0,3 | 0,7-1,1 |
| BK [N/cm] | 20-25 | 20-25 | 10-15 | 20-25 | 35-45 |
| RD [%] | 350 - 400 | 550 - 600 | 250 - 300 | 250 - 300 | 500-550 |
| KK [N/cm] | 18-20 | 12-15 | 12-15 | 18-20 | 18-20 |

| | | | | | |
|---|---|---|---|---|---|
| In der Tabelle 5 bedeuten: Δε - der Dehnungsparameter, TV1 - das Temperaturverhalten der verklebten Folie auf schwarzer Vliesunterspannbahn nach 10 min bei 85 °C, TV2 - das Temperaturverhalten der verklebten Folie auf schwarzer PUR-Dachbahn nach 10 min bei 85 °C, EK - die Elmendorfkraft nach EN 12025, W_{DS} - die Durchstoßarbeit nach DIN ISO 7765-2, BK - die Bruchkraft nach DIN EN 14410, RD - die Reißdehnung nach DIN EN 14410, KK - die Klebkraft (auf Stahl) nach DIN EN 1939. | | | | | |

"Falten" bedeutet dabei für TV1 und TV2, dass ein starker Faltenwurf auftrat, während "-" bedeutet, dass sich keine Falten ausbildeten. Die erfindungsgemäßen Bänder mit PE-Gießfolien-Träger zeigten bei Temperaturbeanspruchung keine Faltenbildung. Alle Bänder waren gut von Hand zu reißen.

Die Erfindung beschränkt sich nicht auf die beschriebenen Ausführungsbeispiele, sondern umfasst auch alle im Rahmen der Ansprüche liegenden Ausführungen. So kann der Fachmann die Erfindung durch zusätzliche vorteilhafte Maßnahmen ergänzen, ohne dass der Rahmen der Erfindung verlassen wird. Derartige Maßnahmen sind beispielsweise die Fertigung eines doppelseitigen Klebebandes oder der Einsatz eines mehrschichtigen Trägers.

## Patentansprüche

1. Technisches Klebeband, insbesondere zur Verklebung von Folien oder Vliesen im Baubereich, mit einem bandförmigen, aus Kunststoff bestehenden Träger und mit einer zumindest auf einer Seite aufgetragenen, druckempfindlichen, aus einem Haftklebstoff bestehenden Klebebeschichtung, die mit einem Flächengewicht von mindestens 100 g/m² aufgetragen ist,
**dadurch gekennzeichnet, dass** der Träger eine gegossene Polyolefinfolie umfasst und derart elastisch und plastisch dehnbar ist, dass ein Differenzwert Δε zwischen der prozentualen Gesamtdehnung bei Belastung und der prozentualen bleibenden Dehnung nach anschließender Entlastung im Bereich von 15 bis 50 Prozent liegt, wobei bei der Messung in Anlehnung an DIN 53360 an 25 mm breiten und mindestens 250 mm langen, längs zur Herstellungsrichtung der Folie entnommenen Probenstreifen unter einer für 30 Minuten aufgebrachten statischen Last von 1 kg die Feststellung der Gesamtdehnung erfolgt und die bleibende Dehnung 30 Minuten nach Entlastung des Probenstreifens ermittelt wird, wobei die Klebebeschichtung aus einem UV-vernetzten oder UV-polymerisierten Acrylatklebstoff besteht.

2. Klebeband nach Anspruch 1,
**dadurch gekennzeichnet, dass** die Polyolefinfolie einen Polyethlyenanteil von mindestens 50 % aufweist.

3. Klebeband nach Anspruch 1 oder 2,
**gekennzeichnet durch** eine wasserdampfdiffusionsäquivalente Luftschichtdicke s_{d} von > 15 m nach DIN 52615.

4. Klebeband nach einem der Ansprüche 1 bis 3,
**dadurch gekennzeichnet, dass** zwischen Träger und Klebebeschichtung oder innerhalb der Klebebeschichtung ein Fadengelege angeordnet ist.

5. Klebeband nach einem der Ansprüche 1 bis 4,
**dadurch gekennzeichnet, dass** das Band von Hand reißbar ist, wobei es eine Reißkraft nach Elmendorf von ≤ 15 N, vorzugsweise ≤ 10 N, aufweist, gemessen nach EN 12025.

6. Klebeband nach einem der Ansprüche 1 bis 5,
**dadurch gekennzeichnet, dass** die Dicke des Trägers im Bereich von 30 µm bis 200 µm, bevorzugt im Bereich von 50 µm bis 80 µm, liegt.

7. Klebeband nach einem der Ansprüche 1 bis 6,
**dadurch gekennzeichnet, dass** der Träger beidseitig mit einem Haftklebstoff beschichtet ist.

8. Klebeband nach einem der Ansprüche 1 bis 7,
**dadurch gekennzeichnet, dass** der Träger mehrschichtig aufgebaut ist.

9. Verwendung eines Klebebandes nach einem der Ansprüche 1 bis 8 zur Verklebung von Dampfsperren, Dampfbremsen und/oder Dachunterspannbahnen.

## Claims

1. A technical adhesive tape, particularly for the bonding of films or nonwovens in the construction sector, having a tapelike carrier consisting of plastic and having, applied at least on one side, a pressure-sensitive adhesive coating which consists of a pressure-sensitive adhesive and is applied with a weight per unit area of at least 100 g/m2,
wherein the carrier comprises a cast polyolefin film and is elastically and plastically extensible such that the difference Δε between the percentage total elongation under load and the percentage permanent elongation after subsequent removal of load is in the range from 15 to 50 percent, with the total elongation being found on measurement in accordance with DIN 53360 on sample strips 25 mm wide and at least 250 mm long, taken longitudinally relative to the production direction of the film, under a static load of 1 kg applied for 30 minutes, and the permanent elongation being determined 30 minutes after removal of load from the sample strip, with the adhesive coating consisting of a UV-crosslinked or UV-polymerized acrylate adhesive.

2. The adhesive tape as claimed in claim 1,
wherein the polyolefin film has a polyethylene fraction of at least 50%.

3. The adhesive tape as claimed in claim 1 or 2,
which has a water vapor diffusion equivalent air layer thickness s_{d} of > 15 m according to DIN 52615.

4. The adhesive tape as claimed in any of claims to 3,
wherein a laid-filament scrim is disposed between carrier and adhesive coating or within the adhesive coating.

5. The adhesive tape as claimed in any of claims 1 to 4,
wherein the tape is tearable by hand, having an Elmendorf tear strength of ≤ 15 N, preferably ≤ 10 N, measured according to EN 12025.

6. The adhesive tape as claimed in any of claims 1 to 5,
wherein the thickness of the carrier is in the range from 30 µm to 200 µm, preferably in the range from 50 µm to 80 µm.

7. The adhesive tape as claimed in any of claims 1 to 6,
wherein the carrier is coated on both sides with a pressure-sensitive adhesive.

8. The adhesive tape as claimed in any of claims 1 to 7,
wherein the carrier is of multilayer construction.

9. The use of an adhesive tape as claimed in any of claims 1 to 8 for adhesive bonding of vapor barriers, vapor retarders and/or roofing underlay sheets.

## Revendications

1. Bande adhésive technique, en particulier pour le collage de films ou de non-tissés dans le domaine de la construction, avec un support en forme de bande, se composant de plastique et avec un revêtement adhésif sensible à la pression, appliqué au moins sur un côté, se composant d'une colle autoadhésive et qui est appliqué avec un grammage d'au moins 100 g/m²,
**caractérisée en ce que** le support comporte un film de polyoléfine fondu et est extensible élastiquement et plastiquement de telle manière qu'une valeur différentielle Δε entre le pourcentage d'allongement global lors de la charge et le pourcentage d'allongement restant après la décharge consécutive se trouve dans la plage allant de 15 à 50 pour cent, la détermination de l'allongement global, lors de la mesure conformément à la norme DIN 53360, étant effectuée sur des bandes d'échantillon, retirées du film le long du sens de fabrication, de 25 mm de large et au moins 250 mm de long, sous une charge statique de 1 kg appliquée pendant 30 minutes, et l'allongement restant étant calculé 30 minutes après la décharge de la bande d'échantillon, le revêtement adhésif se composant d'une colle d'acrylate réticulée par des rayons UV ou polymérisée par des rayons UV.

2. Bande adhésive selon la revendication 1,
**caractérisée en ce que** le film de polyoléfine présente une part de polyéthylène d'au moins 50 %.

3. Bande adhésive selon la revendication 1 ou 2,
**caractérisée par** une épaisseur de couche d'air équivalente à la diffusion de vapeur d'eau s_{d} > 15 m selon la norme DIN 52615.

4. Bande adhésive selon l'une quelconque des revendications 1 à 3,
**caractérisée en ce qu'**une structure fibreuse est agencée entre le support et le revêtement adhésif ou dans le revêtement adhésif.

5. Bande adhésive selon l'une quelconque des revendications 1 à 4,
**caractérisée en ce que** la bande peut être rompue à la main, celle-ci présentant une force de rupture selon Elmendorf ≤ 15 N, de préférence ≤ 10 N, mesurée selon la norme EN 12025.

6. Bande adhésive selon l'une quelconque des revendications 1 à 5,
**caractérisée en ce que** l'épaisseur du support se trouve dans la plage de allant de 30 à 200 µm, de préférence dans la plage allant de 50 à 80 µm.

7. Bande adhésive selon l'une quelconque des revendications 1 à 6,
**caractérisée en ce que** le support est revêtu de part et d'autre d'une colle autoadhésive.

8. Bande adhésive selon l'une quelconque des revendications 1 à 7,
**caractérisée en ce que** le support est constitué de plusieurs couches.

9. Utilisation d'une bande adhésive selon l'une quelconque des revendications 1 à 8, pour le collage d'écrans pare-vapeurs, de barrières pare-vapeurs et/ou d'écran de sous-toiture.
